# FASCICULE DE BREVET EUROPEEN

(11) **EP 1 760 398 B1**
(45) Date de publication et mention de la délivrance du brevet: **21.11.2007**
(21) Numéro de dépôt: 06291346.2
(22) Date de dépôt: 23.08.2006
(51) Int. Cl.: F23D 14/12

(54) **Appareil et système de conditionnement d'air à double effet**
Klimaanlage mit doppelter Wirkung
Double effect air conditioning apparatus and system

(30) Priorité: 05.09.2005 FR 0509045
(43) Date de publication de la demande: 07.03.2007
(73) Titulaire: GAZ DE FRANCE, 75017 Paris (FR)
(72) Inventeur: Pages, Yves, 93290 Tremblay en France (FR); Duquesne, Pascal, 95300 Livilliers (FR)
(74) Mandataire: Bentz, Jean-Paul

(56) Documents cités:
- EP-A1- 0 269 892
- GB-A- 688 216
- GB-A- 2 306 124
- US-A- 3 307 529
- US-A- 3 622 133
- US-A- 3 776 214
- US-A- 5 620 503
- US-A1- 2005 105 898
- US-A1- 2005 175 944

## Description

L'invention concerne, de façon générale, le domaine des équipements de confort.

Plus précisément, l'invention concerne, selon un premier de ses aspects, un appareil de conditionnement d'air comprenant une unité de chauffage au gaz fonctionnant par rayonnement.

Des appareils de ce type sont bien connus et sont notamment utilisés, sur les terrasses de cafés, d'hôtels et de restaurants, pour permettre aux clients de tels établissements de rester à l'extérieur des bâtiments chauffés même lorsque la température externe est relativement basse.

L'invention repose sur la mise en évidence du fait que le confort de ces appareils pouvait être accru de façon très sensible, et a pour but de proposer un appareil offrant plus de confort sur une plage de température beaucoup plus large.

A cette fin, l'appareil de l'invention, par ailleurs conforme à la définition générique qu'en donne le préambule ci-dessus, est essentiellement caractérisé en ce qu'il comprend en outre une unité de brumisation et en ce que l'unité de chauffage et l'unité de brumisation comportent des moyens de commande respectifs séparés, ce dont il résulte que les unités de chauffage et de brumisation peuvent être mises en marche simultanément ou indépendamment l'une de l'autre.

En effet, bien que la brumisation soit déjà connue et utilisée pour abaisser localement la température ambiante en période estivale, il est apparu qu'un appareil conforme à l'invention pouvait, par le recours simultané au chauffage et à la brumisation, offrir en période hivernale un confort supérieur à celui qu'offrent les appareils de chauffage connus grâce à un contrôle du taux d'humidité de l'air, généralement beaucoup plus sec en hiver. Un appareil de conditionnement d'air mettant en oeuvre une unité de chauffage et une unité de brumisation à commandes séparées est décrit dans le document US-5620503-A.

L'appareil de l'invention comprend un socle et l'unité de chauffage comprend au moins un brûleur radiant et un réflecteur, chaque brûleur pouvant être constitué par un brûleur à fibre métallique.

Le réflecteur présente par exemple une forme oblongue et concave qui s'évase à distance croissante du socle et dont la concavité est tournée vers chaque brûleur.

En particulier, chaque brûleur peut être constitué par un brûleur à rampe, de forme allongée, s'étendant à partir du socle.

De préférence, cet appareil est doté d'une tôle perforée assurant la protection de chaque brûleur, ainsi que d'une veilleuse et / ou d'un allumeur permettant l'allumage de chaque brûleur, et d'un organe de télécommande sur lequel sont prévus les moyens de commande.

L'unité de brumisation comprend une ou plusieurs buses alimentées en eau sous pression par une pompe.

L'appareil de l'invention peut aussi comprendre une potence coudée permettant une fixation murale, cette potence étant montée de façon orientable par rapport au socle.

L'invention concerne également un système de conditionnement d'air comprenant au moins un appareil de conditionnement d'air tel que précédemment défini, ce système étant caractérisé en ce qu'il comprend en outre une pompe propre à alimenter en eau sous pression l'unité de brumisation de chaque appareil de conditionnement de ce système.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue schématique en perspective d'un appareil conforme à l'invention;
- la figure 2 est une vue partielle d'un système de conditionnement d'air utilisant au moins l'appareil illustré à la figure 1 et représenté ici de côté;
- la figure 3 est une vue schématique d'une télécommande utilisable pour la mise en marche séparée ou simultanée des unités de chauffage et de brumisation;
- la figure 4 est une vue schématique partielle et en perspective arrière d'un appareil conforme à l'invention, permettant d'illustrer le montage du socle sur la potence;
- la figure 5 est une vue arrière d'un appareil conforme à l'invention;
- la figure 6 est une vue de côté de l'appareil illustré à la figure 5; et
- la figure 7 est une vue de dessous de l'appareil illustré à la figure 5.

Comme annoncé précédemment, l'invention concerne notamment un appareil de conditionnement d'air, comprenant une unité de chauffage au gaz 1 fonctionnant par rayonnement.

L'appareil de l'invention comporte en outre une unité de brumisation comprenant une ou plusieurs buses 20 reliées par un conduit tel que 21 à une pompe 22 d'alimentation en eau sous pression.

Selon une autre caractéristique de l'invention, l'unité de chauffage 1 et l'unité de brumisation 20 et 21 comportent des moyens de commande respectifs séparés 31 et 32, de sorte qu'elles peuvent être placées en état de fonctionnement ensemble ou indépendamment l'une de l'autre.

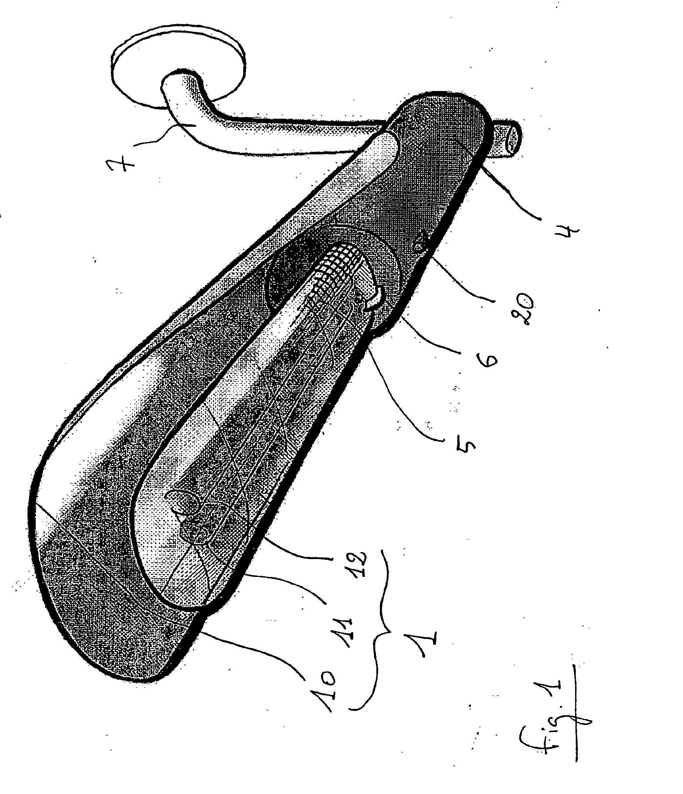

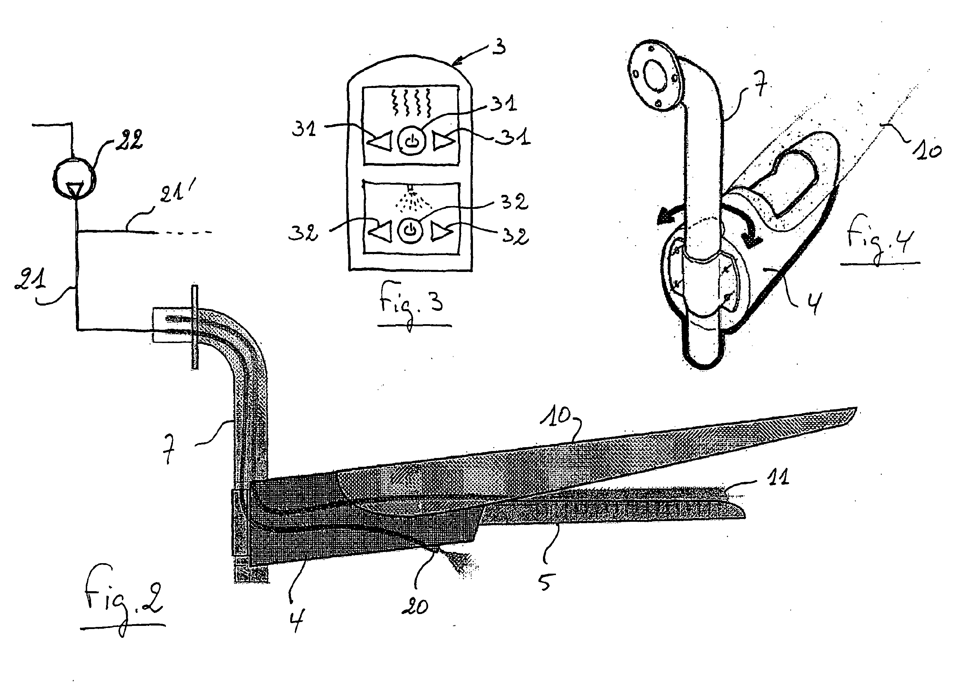

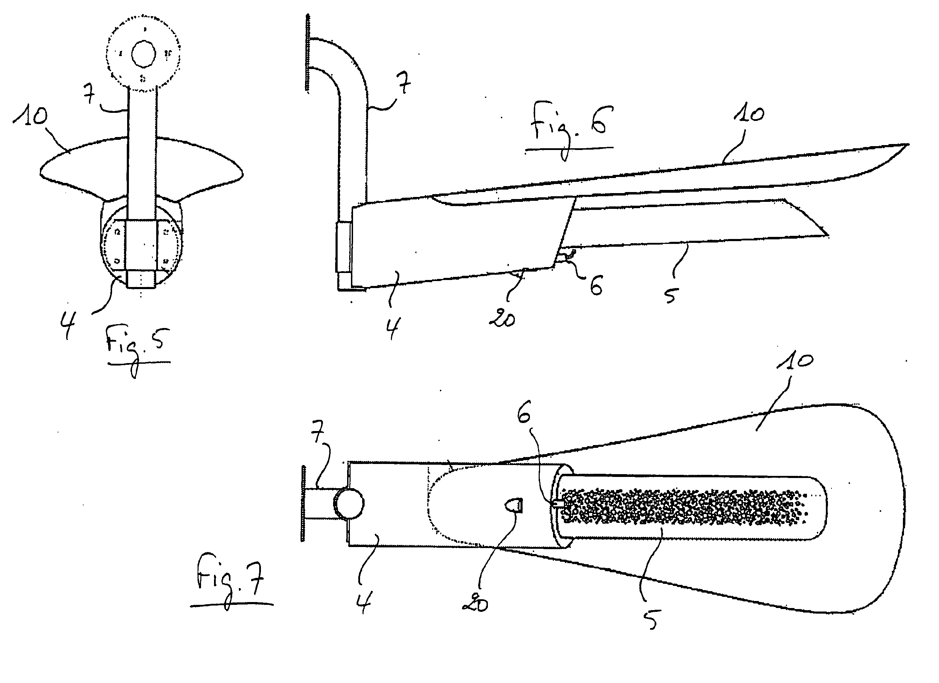

Comme le montre la figure 3, ces moyens de commande 31 et 32 sont de préférence prévus sur un même organe de télécommande 3 et permettent donc au moins de faire fonctionner l'unité de chauffage seule, l'unité de brumisation seule, ou à la fois les unités de chauffage et de brumisation.

Plus avantageusement encore, ces moyens de commande 31 et 32 sont conçus pour permettre un réglage individuel des unités de chauffage et de brumisation.

Comme le comprendra aisément l'homme de métier, l'appareil est en outre équipé à cette fin d'un récepteur des signaux émis par l'organe de télécommande, de relais électriques pilotés par le récepteur, et d'au moins une électrovanne d'alimentation en gaz, la pompe 22 d'alimentation en eau et l'électrovanne étant ainsi commandés par les relais électriques en fonction des signaux émis par l'organe de télécommande 3.

L'unité de chauffage 1 comprend par exemple deux brûleurs radiants 11 et 12, et un réflecteur 10, ces éléments étant montés sur un socle 4.

Les brûleurs 11 et 12 sont de préférence constitués par des brûleurs à rampe et à fibre métallique, de forme allongée, s'étendant parallèlement l'un à l'autre à partir du socle 4, et protégés par une tôle perforée 5. Cet appareil est en outre avantageusement équipé d'une veilleuse et / ou d'un allumeur piézoélectrique 6 permettant l'allumage des brûleurs 11 et 12.

Le réflecteur 10 présente une forme oblongue et concave qui s'évase à distance croissante du socle 4 et dont la concavité est tournée vers les brûleurs 11 et 12.

L'appareil de l'invention peut être fixé sur un mur grâce à une potence coudée 7 par rapport à laquelle le socle 4 peut être orienté comme le montre la figure 4.

Plusieurs appareils tels que précédemment décrits peuvent être associés pour former un système de conditionnement d'air.

Dans ce cas, il est avantageux de prévoir que la pompe 22 d'alimentation en eau sous pression de ce système soit raccordée à l'unité de brumisation 20-21 de chaque appareil de conditionnement dont ce système est doté.

## Revendications

1. Appareil de conditionnement d'air, comprenant une unité de chauffage au gaz (1) : et une unité de brumisation (20-21), l'unité de chauffage (1) et l'unité de brumisation (20-21) comportant des moyens de commande respectifs séparés (31, 32) permettant de mettre les unités de chauffage (1) et de brumisation (20-21) en marche simultanément ou indépendamment l'une de l'autre, et **caractérisé en ce que** l'unité de chauffage (1) fonctionne par rayonnement et comprend un socle (4) ainsi qu'au moins un brûleur (11,12) et un réflecteur (10), le dit réflecteur : (10) présentant une forme oblongue et concave qui s'évase à distance croissante du socle (4) et dont la concavité est tournée vers chaque brûleur (11, 12).

2. Appareil de conditionnement d'air selon la revendication 1, **caractérisé en ce que** chaque brûleur est un brûleur radiant (11, 12).

3. Appareil de conditionnement d'air selon l'une quelconque des revendications précédentes, **caractérisé en ce que** chaque brûleur (11, 12) est un brûleur à fibre métallique.

4. Appareil de conditionnement d'air selon l'une quelconque des revendications précédentes, **caractérisé en ce qu**'il comprend une tôle perforée (5) assurant la protection de chaque brûleur (11, 12).

5. Appareil de conditionnement d'air selon l'une quelconque des revendications précédentes, **caractérisé en ce qu**'il est équipé d'une veilleuse et / ou d'un allumeur (6) permettant l'allumage de chaque brûleur (11, 12), et d'un organe de télécommande (3) sur lequel sont prévus les moyens de commande (31, 32).

6. Appareil de conditionnement d'air selon l'une quelconque des revendications précédentes, **caractérisé en ce que** chaque brûleur (11, 12) est un brûleur à rampe, de forme allongée, s'étendant à partir du socle (4).

7. Appareil de conditionnement d'air selon l'une quelconque des revendications précédentes, **caractérisé en ce que** l'unité de brumisation (20-21) comprend au moins une buse (20).

8. Appareil de conditionnement d'air selon l'une quelconque des revendications précédentes, **caractérisé en ce qu**'il comprend une potence coudée (7) permettant une fixation murale, cette potence étant montée de façon orientable par rapport au socle (4).

9. Système de conditionnement d'air comprenant au moins un appareil de conditionnement d'air selon l'une quelconque des revendications précédentes, **caractérisé en ce qu**'il comprend en outre une pompe (22) propre à alimenter en eau sous pression l'unité de brumisation (20-21) de chaque appareil de conditionnement de ce système.

## Claims

1. Air conditioning appliance, comprising a gas heating unit (1) and an atomising unit (20-21), the heating unit (1) and the atomising unit (20-21) comprising separate respective control means (31-32) making it possible to start the heating (1) and atomising (20-21) units simultaneously or independently of each other, and **characterised in that** the heating unit (1) functions by radiation and comprises a base (4) and at least one burner (11, 12) and a reflector (10), the said reflector (10) having an oblong concave shape that splays out at an increasing distance from the base (4) and the concavity of which is turned towards each burner (11, 12),

2. Air conditioning appliance according to claim 1, **characterised in that** each burner is a radiant burner (11, 12).

3. Air conditioning appliance according to any one of the preceding claims, **characterised in that** each burner (11, 12) is a metal-fibre burner.

4. Air conditioning appliance according to any one of the preceding claims, **characterised in that** it comprises a perforated metal sheet (5) protecting each burner (11, 12).

5. Air conditioning appliance according to any one of the preceding claims, **characterised in that** it is equipped with a pilot light and/or an igniter (6) allowing the ignition of each burner (11, 12), and a remote-control device (3) on which the control means (31, 32) are provided.

6. Air conditioning appliance according to any one of the preceding claims, **characterised in that** each burner (11, 12) is bar burner, elongate in shape, extending from the base (4).

7. Air conditioning appliance according to any one of the preceding claims, **characterised in that** the atomising unit (20, 21) comprises at least one nozzle (20).

8. Air conditioning appliance according to any one of the preceding claims, **characterised in that** it comprises an angled bracket (7) allowing wall fixing, this bracket being mounted so as to be able to be oriented with respect to the base (4).

9. Air conditioning system comprising at least one air conditioning appliance according to any one of the preceding claims, **characterised in that** it also comprises a pump (22) able to supply the atomising unit (20-21) of each conditioning appliance of this system with water under pressure.

## Patentansprüche

1. Klimatisierungsgerät mit einer gasbetriebenen Heizeinheit (1) und einer Einheit zur Nebelbildung (20-21), wobei die Heizeinheit (1) und die Einheit zur Nebelbildung (20-21) jeweils getrennte Steuereinrichtungen (31, 32) umfassen, die ein gleichzeitiges oder von einander unabhängiges inbetrieb setzen der Heizeinheit (1) und Einheit zur Nebelbildung (20-21) ermöglichen, und **dadurch gekennzeichnet, dass** die Heizeinheit (1) mittels Strahlung funktioniert und einen Sockel (4) sowie wenigstens einen Brenner (11, 12) und einen Reflektor (10) umfasst, wobei der Reflektor (10) eine längliche konkave Form aufweist, die sich mit Entfernung vom Sockel (4) sichelförmig erweitert und dessen Konkavität in Richtung jedes Brenners (11, 12) gerichtet ist.

2. Klimatisierungsgerät nach Anspruch 1,
**dadurch gekennzeichnet,**
**dass** jeder Brenner Strahlungsbrenner (11, 12) ist.

3. Klimatisierungsgerät nach einem der vorhergehenden Ansprüche,
**dadurch gekennzeichnet,**
**dass** jeder Brenner (11, 12) ein Brenner mit Metallfasern ist.

4. Klimatisierungsgerät nach einem der vorhergehenden Ansprüche,
**dadurch gekennzeichnet,**
**dass** dieses ein perforiertes Blech (5) umfasst, welches den Schutz jedes Brenners (11,12) gewährleistet.

5. Klimatisierungsgerät nach einem der vorhergehenden Ansprüche,
**dadurch gekennzeichnet,**
**dass** dieses mit einem Sparbrenner und/oder einem Zünder (6) versehen ist, der die Zündung jedes Brenners (11,12) ermöglicht, und eine Fernsteuerung (3) zu sehen ist, auf welcher die Steuereinrichtung (21, 22) vorgesehen ist.

6. Klimatisierungsgerät nach einem der vorhergehenden Ansprüche,
**dadurch gekennzeichnet,**
**dass** jeder Brenner (11, 12) ein Rampenbrenner in länglicher Form ist, der sich vom Sockel aus (4) erstreckt.

7. Klimatisierungsgerät nach einem der vorhergehenden Ansprüche,
**dadurch gekennzeichnet,**
**dass** die Einheit zur Nebelbildung (20-21) wenigstens eine Düse (20) umfasst.

8. Klimatisierungsgerät nach einem der vorhergehenden Ansprüche,
**dadurch gekennzeichnet,**
**dass** dieses einen knieförmigen Träger (7) aufweist, welcher eine Wandbefestigung ermöglicht, wobei dieser Träger im Bezug zum Sockel (4) ausrichtbar montiert wird.

9. Klimatisierungssystem mit wenigstens einem Klimatisierungsgerät nach einem der vorhergehenden Ansprüche,
**dadurch gekennzeichnet,**
**dass** dieses von einer Pumpe (20) umfasst, die dazu geeignet ist, die Einheit zur Nebelbildung (20-21) jedes Klimatisierungsgerätes dieses Systems mit Druckwasser zu versorgen.
